(19) **Europäisches Patentamt**

**European Patent Office**

**Office européen des brevets**

(11) Veröffentlichungsnummer : **0 318 818 B1**

(12) **EUROPÄISCHE PATENTSCHRIFT**

(45) Veröffentlichungstag der Patentschrift :
29.01.92 Patentblatt 92/05

(51) Int. Cl.⁵ : **F16D 1/06,** F16C 3/02

(21) Anmeldenummer : **88119516.8**

(22) Anmeldetag : **24.11.88**

(54) **Anordnung mit einer Klebeverbindung zwischen einer Nabe und einem Rohr.**

(30) Priorität : **03.12.87 DE 3740908**

(43) Veröffentlichungstag der Anmeldung :
**07.06.89 Patentblatt 89/23**

(45) Bekanntmachung des Hinweises auf die
Patenterteilung :
**29.01.92 Patentblatt 92/05**

(84) Benannte Vertragsstaaten :
**ES FR IT SE**

(56) Entgegenhaltungen :
**CH-A- 368 345**
**GB-A- 1 018 530**
**GB-A- 1 276 074**
**GB-A- 2 012 649**
**US-A- 4 190 479**

(73) Patentinhaber : **GKN AUTOMOTIVE**
**AKTIENGESELLSCHAFT**
**Alte Lohmarer Strasse 59**
**W-5200 Siegburg (DE)**

(72) Erfinder : **Petrzelka, Miloslav**
**Zum Grengel 10**
**W-5203 Much-Kranüchel (DE)**
Erfinder : **Hoffmann, Werner, Dipl.-Ing.**
**Hohenzollern 5**
**W-5200 Siegburg (DE)**

(74) Vertreter : **Neumann, Ernst Dieter, Dipl.-Ing. et al**
**HARWARDT NEUMANN PATENTANWÄLTE**
**Scheerengasse 2 Postfach 1455**
**W-5200 Siegburg (DE)**

EP 0 318 818 B1

**Beschreibung**

Die Erfindung betrifft eine Anordnung mit einer Klebeverbindung zwischen einer Nabe oder einem Wellenzapfen einerseits und einem darauf aufgesteckten Rohrkörper oder einer Hohlwelle andererseits, wobei letztere insbesondere aus Faserverbundwerkstoff bestehen und wobei die Nabe oder der Zapfen voneinander mit axialem bestand angeordnete Zentrierungen aufweist, die über den ganzen Umfang an der Innenwandung des Rohrkörpers oder der Hohlwelle anliegen, wobei die Nabe oder der Zapfen mit der Innenwandung des Rohrkörpers oder der Hohlwelle zwischen den Zentrierungen einen Ringspalt für ein Klebstoffvolumen bildet, der über zwei sich diametral gegenüberliegende Verbindungsöffnungen zum Einfüllen von Klebstoff einerseits und zum Entlüften andererseits mit der Umgebung verbunden ist. Insbesondere bei solchen Werkstoffen, bei denen eine Schweißverbindung nicht infrage kommt, hat sich das Kleben inzwischen als bevorzugte Art der Verbindung erwiesen, die einem Formschluß — zum Beispiel durch Längsverzahnung oder durch Durchstecken von Nieten — aus Kosten- und aus Festigkeitsgründen überlegen ist. Dieses Kleben ist nicht auf Wellen aus Faserverbundwerkstoffen beschränkt, sondern kann eine sinnvolle Anwendung auch bei Leichtmetallen und ähnlichem finden.

Aus der japanischen Gebrauchsmusteroffenlegung 62-50316 (1987) ist eine Anordnung der bekannt, bei der auf einem Wellenzapfen zwei Zentrierungen mit einem dazwischenliegenden Zapfenabschnitt geringeren Durchmessers vorgesehen sind. Bei aufgeschobenem Rohrkörper wird hierdurch ein ringzylindrischer Hohlraum für Klebstoff gebildet, der nur eingeführt werden kann, wenn die Teile noch nicht vollständig ineinandergeschoben sind. Dies kann nur in senkrechter Lage und unter Verlust von Klebstoff erfolgen. Wenn die Teile abschließend vollständig ineinandergeschoben werden, können Lufteinschlüsse entstehen.

Aus der DE 3337364 C2 ist eine Anordnung bekannt, bei der im Nabenkörper Längsnuten vorgesehen sind, in die das Klebemedium eingepresst wird. Nach den Anmeldungen GB 26244-76 und GB 13352-77, deren Inhalt in der DE 2728306 A1 zusammengefaßt ist, sind im Nabenkörper eine oder mehrere schraubenförmige Nuten vorgesehen, durch die ebenfalls unter Druck das Klebemittel eingepreßt wird.

Die beiden vorstehend genannten Lösungen weisen im wesentlichen übereinstimmende Nachteile auf, die darin begründet liegen, daß vom Kleber lange Wege in Nuten gleichbleibenden Querschnittes durchsetzt werden müssen, was aufgrund der Wandhaftung und inneren Reibung des Klebers einen zunehmend hohen Druck erfordert. Die Grenzen hierfür liegen in der Festigkeit des Rohrkörpers und können ohne weiteres erreicht werden, bevor die Rillen insgesamt ausgefüllt sind.

In jedem Fall erfordert das Füllen der langen Nuten einen hohen Zeitaufwand, wobei bei mehreren Nuten insbesondere das Zuführen des Klebers problematisch wird. Da der Klebstoff schließlich nicht einsehbar im Rohrinneren austritt, kann das vollständige Befüllen nicht an jeder Einzelverbindung überprüft werden, sondern nur empirisch ermittelt werden, wobei je nach sich leicht ändernden Randbedingungen die Gefahr einer unvollständigen Füllung oder einer Austretens von überschüssigem Kleber mit Unwuchterscheinungen in der Folge besteht.

Dadurch, daß zwischen den Nuten oder Rillen Stege vorgesehen sein müssen, die gleichzeitig der Führung und Zentrierung dienen, geht ein Teil der zur Verfügung stehenden Rohrinnenfläche für die Klebeverbindung verloren ; zugleich bedeutet dies in nachteiliger Weise aber auch ein inhomogenes Einleiten der Kräfte in den Rohrkörper.

Abschließend ist festzustellen, daß die mechanische Fertigung einer Nabe nach dem obengenannten Stand der Technik sehr aufwendig ist.

Aus der GB-A 2012649 ist eine gattungsgemäße Anordnung bekannt, deren Ringspalt entweder aus mehreren einzelnen Umfangsnuten, die durch Axialnuten verbunden sind, oder aus einer spiralförmigen Nut der oben bereits beschriebenen Art besteht. Der unmittelbare Zutritt zu diesen Nuten zum Befüllen und Entlüften erfolgt auf sich diametral gegenüberliegenden Seiten des Rohrzapfens, jedoch an axial entgegengesetzten Enden des Ringspaltes, wenn auch Verbindungskanäle jeweils von dort zum außenliegenden Zapfenende führen. Der örtliche freie Strömungsquerschnitt des Ringspaltes für den Klebstoff ändert sich damit in Strömungsrichtung im ersten Fall periodisch in axialer Richtung, während er im zweiten Fall in axialer Richtung konstant bleibt. Wenn auch durch die Austrittsöffnung eine Kontrolle für das vollständige Befüllen möglich ist, ist doch ein zunehmender Druck beim Befüllen aufzubringen, der aufgrund der Länge der Nuten und der begrenzten Nutquerschnitte hoch sein wird und die Festigkeit des Rohrkörpers gefährden kann. Die mechanische Fertigung einer Nabe dieser Art ist ebenfalls aufwendig.

Der Erfindung liegt die Aufgabe zugrunde, eine Anordnung der eingangs genannten Art und ein Verfahren zu deren Verbinden bereitzustellen, bei der bei geringem konstruktivem Aufwand ein schnelles erleichtertes, insbesondere lageunabhängiges Herstellen der Klebeverbindung mit verbesserter Genauigkeit und unter verringertem Klebstoffverlust möglich ist und bei der die fertiggestellte Klebeverbindung zu günstigen Verhältnissen hinsichtlich der Kräfteeinleitung in den Rohrkörper führt.

EP 0 318 818 B1

Die Lösung besteht darin, daß der Ringspaltquerschnitt in axialer Richtung einen abnehmenden Fließwiderstand gegenüber flüssig eingepreßtem Klebstoff aufweist, und daß der unmittelbare Zutritt der Verbindungsöffnungen zum Ringspalt zum Einfüllen von Klebstoff einerseits und zum Entlüften andererseits an dem Ende mit dem höheren Fließwiderstand des Ringspaltquerschnitts liegt. Hierbei bestimmt der Fließwiderstand des Ringspaltes für eingepreßten Klebstoff einen symmetrischen Fließverlauf unter vollständigem Auspressen der eingeschlossenen Luft, der sich wie folgt darstellt. Der Klebstoff wird unter Druck durch eine der Verbindungsöffnungen eingepreßt, die am Ende des ringförmigen Spaltes mit dem größeren Fließwiderstands angeordnet ist. Von hier aus breitet sich der Klebstoff vorwiegend axial in Richtung des abnehmenden Fließwiderstands in dem ringförmigen Spalt zwischen Rohrinnenwand und Nabe aus, bis er an der gegenüberliegenden Zentrierung ankommt, die gleichzeitig die Begrenzung des mit Klebstoff zu beaufschlagenden Ringraumes bildet. Sobald der sich wegen des geringsten Fließwiderstandes als erstes füllende Streifen des ringförmigen Spalts vollständig mit Klebstoff gefüllt hat, fließt der Klebstoff in beiden Richtungen in den Ringraum, zwischen Rohrinnenwand und Nabe nach beiden Seiten hin ab, wobei die Fließgeschwindigkeit an der der Zuführöffnung entgegengesetzten Zentrierung am höchsten ist. Das Ergebnis ist, daß der Ringspalt auf der Gegenseite als erstes vom Ende mit dem geringeren Fließwiderstand her gefüllt wird und dann langsam sich zum Ende mit dem zunehmenden Fließwiderstand hin füllt, wobei schließlich das gesamte Ringvolumen von Klebstoff eingenommen wird. Sobald an der der Einfüllöffnung diametral gegenüberliegenden Entlüftungsöffnung Klebstoff austritt, kann davon ausgegangen werden, daß keine Lufteinschlüsse mehr im Verklebebereich vorhanden sind. Um ein Austreten von Klebstoff nach dem Füllvorgang zu verhindern, können Stopfen in die beiden Öffnungen eingesetzt werden.

Das Ergebnis dieser Verbindung zeichnet sich dadurch aus, daß der gesamten inneren Ringfläche des Rohrkörpers im Verbindungsbereich Klebstoff anhaftet, so daß die insbesondere bei Wellen aus Faserverbundwerkstoff kritische Krafteinleitung besonders günstig ist. Hinsichtlich der Verbindung zum Zapfen bzw. zur Nabe, die in der Regel aus metallischen Werkstoff sind und bei denen andere Haftverhältnisse vorliegen, ist in gleicher Weise ein großflächige ununterbrochene Verbindung hergestellt.

Nach einer ersten prinzipiellen Ausgestaltung ist der zunehmende Fließwiderstand dadurch darzustellen, daß zumindest eine der durch die Nabe und den Rohrkörper gebildeteten Oberflächen des Ringspalts eine den Fließwiderstand bestimmende axial veränderliche Oberflächenbeschaffenheit aufweist, insbesondere eine vom Zutritt der Verbindungsöffnungen ausgehend abnehmende Rauhtiefe. Vorteilhafterweise können hierbei die Oberflächen der Nabe und des Rohrkörpers als ganzes betrachtet zylindrisch ausgebildet werden, wodurch sich die Herstellbarkeit und die Festigkeit überaus günstig verhalten. Die veränderte Rauhtiefe kann bereits bei der Herstellung, z.B. durch entsprechende Formen hergestellt werden, bevorzugt ist jedoch eine nachträgliche Erzeugung der entsprechenden Oberflächen, z.B. am Zapfen durch Schneiden eines Gewindeganges mit zunehmender Tiefe. Trotz gleichbleibenden Querschnittes des Ringspaltes wird hiermit eine in axialer Richtung abnehmende Wandreibung erzeugt, die zu dem oben geschilderten Fließverhalten führt.

In einer zweiten grundsätzlichen Ausgestaltung werden Rohrkörper und Nabe dermaßen ausgebildet, daß der durch die Nabe und den Rohrkörper gebildete Ringspalt eine den Fließwiderstand beeinflussende vom Zutritt der Verbindungsöffnungen ausgehend axial zunehmende, insbesondere im Längsschnitt keilförmige radiale Dicke aufweist. Hierbei ist die Wandreibung in axialer Richtung im wesentlichen unverändert, durch den zunehmenden Spaltquerschnitt wird jedoch die innere Reibung herabgesetzt, so daß sich ebenfalls das oben im einzelnen beschriebene Fließverhalten des Klebstoffes einstellt. Die bevorzugt am Zapfen auszubildende leicht konische Form ist ohne besonderen Herstellungsaufwand bei gedrehten Teilen problemlos zu erzeugen.

Für die Ausgestaltung des Ringspaltes zunehmender radialer Dicke ergeben sich neben der rein konischen Ausgestaltung des Zapfens auch andere Möglichkeiten, z.B. eine Änderung der radialen Dicke in Stufen, die die erfindungsgemäße Wirkung in gleicher Weise garantiert.

Bei besonders dünnwandigen Rohren, bei axial besonders langen Ringräumen oder bei einem deutlichen Übermaß der Zentrierungen der Nabe gegenüber dem Rohrkörper, jeweils alleine oder in Kombination, kann es zu einer unerwünschten Einschnürung des Rohrkörpers in der Mitte des Ringraumes kommen, wodurch die vorher bestimmte axiale Änderung des Fließwiderstandes gestört wird. Um dies zu überwinden, kann es günstig sein, Abstützelemente am Zapfen oder am Rohrkörper anzubringen, die eine Abstützung des Rohrkörpers gegenüber dem Zapfen erzeugen und die so umfangsverteilt mit axialen Durchbrüchen angeordnet sind, daß sie das Fließen des Klebstoffes in axialer Richtung nicht behindern. Es kann sich hierbei z.B. um einen mit einer Rändelung versehenen zusätzlichen Bund handeln, üblicherweise werden jedoch Noppen mit größeren Umfangsabständen vorgesehen werden.

Wenn der Wärmeausdehnungseffizient des Rohrkörpers wesentlich größer ist als der des Zapfens, beispielsweise bei der Kombination eines Faserverbundrohres mit einem Metallzapfen, kann es vorkommen, daß sich beim Erwärmen zum Aushärten des Klebstoffes das Volumen des Ringraumes vergrößert, wobei sich gleichzeitig der Preßsitz an den Zentrierungen lockert, ohne notwendigerweise die Vorspannung völlig zu ver-

3

lieren. Dies kann dennoch zur Folge haben, daß der bei Erwärmung zeitweise vergrößerte Ringraum Luft anzieht und somit unerwünschte Lufteinschlüsse auftreten, mit denen der Klebstoff aushärtet. Hiergegen ist ebenfalls die vorgenannte, insbesondere über die Länge verteilte zusätzliche Abstützung des Rohrkörpers gegenüber dem Zapfen unter Vorspannung einzusetzen, die die Bewegungsmöglichkeiten des Rohrkörpers reduziert.

Um bei unveränderter axialer Baulänge die zur Verfügung stehende Oberfläche für die Klebeverbindung zu vergrößern, ist nach einer weiteren günstigen Ausgestaltung vorgesehen, daß die Nabe einen äußeren Ringansatz aufweist, der das Ende des Rohrkörpers übergreift und mit diesem einen weiteren Ringspalt bildet, der mit dem ersten Ringspalt über Durchtrittsöffnungen am Ende des Rohrkörpers verbunden ist. Hierbei ist der Fließwiderstand des äußeren Ringkörpers so auszulegen, daß er in entgegengesetzter Richtung wie der Fließwiderstand des inneren Ringraumes zunimmt, was zur Folge hat, daß zunächst aus dem ersten Ringraum die Luft vollkommen ausgepreßt wird, der Klebstoff dann in den äußeren Ringraum übertritt und sich dort zunächst ringförmig und dann erst axial ausbreitet, um auch hier die Luft vollständig auszupressen.

Nach einer bevorzugten Ausgestaltung schließt sich jeweils an die am Rohrende gelegene Zentrierung ein Bund größeren Durchmessers an, an der das Rohrende zum Anschlag kommen kann, so daß die Einstecktiefe problemlos kontrolliert werden kann und die Verbindung zugleich axiale Schubkräfte verbessert aufnehmen kann.

Die Verbindungsöffnungen können nach einer ersten bevorzugten Ausführung sich gegenüberliegende radiale Bohrungen oder kurze Quernuten in der Nabe oder im Zapfen umfassen, die mit axialen Bohrungen in Form von Sacklöchern im Bund bzw. einem Flanschteil der Nabe in Verbindung stehen. In günstiger Weise können hierbei über eingebrachte Gewinde Einfüllnippel bzw. Verschlußstopfen Verwendung finden.

Nach einer alternativen, konstruktiv einfacheren Ausgestaltung werden einfach radiale, sich gegenüberliegende Bohrungen im Rohrkörper eingebracht, in die ebenfalls Nippel bzw. Stopfen eingeschraubt oder eingesetzt und verklebt werden können.

Die zuletzt genannte Anordnung der Verbindungsöffnungen bietet sich auch dann an, wenn an der Nabe oder dem Wellenzapfen mehrere gleichartige durch Zentrierunde abgeteilte Anordnungen hintereinander vorgesehen werden, wenn zum Beispiel ein besonders langer Verbindungsbereich erforderlich wird und das Fließverhalten des Klebers die Füllung über nur einen ringförmigen Spalt nicht zuläßt.

Ausführungsbeispiele der Erfindung ergeben sich aus den nachfolgenden Figuren.

Fig. 1    zeigt eine erfindungsgemäße Anordnung im Längsschnitt mit einer ersten Ausführung der Zuführungsbohrungen im Zapfen,

Fig. 2    zeigt einen Querschnitt durch die Anordnung nach Figur 1,

Fig. 3    zeigt eine Anordnung nach Figur 1 in perspektivischer Darstellung, in der das Fließverhalten des Klebstoffes erkennbar wird,

Fig. 4    zeigt eine erfindungsgemäße Anordnung im Längsschnitt mit einem Ringraum mit axial veränderlicher Oberflächenbeschaffenheit,

Fig. 5    zeigt eine erfindungsgemäße Anordnung im Längsschnitt mit axial veränderlicher radialer Dicke,

Fig. 6    zeigt eine erfindungsgemäße Anordnung im Längsschnitt mit axial stufig veränderlicher radialer Dicke,

Fig. 7    zeigt eine erfindungsgemäße Anordnung im Längsschnitt mit Abstützmitteln zur Verhinderung der Einschnürung,

Fig. 8    zeigt eine erfindungsgemäße Anordnung mit einem zusätzlichen äußeren Ringraum.

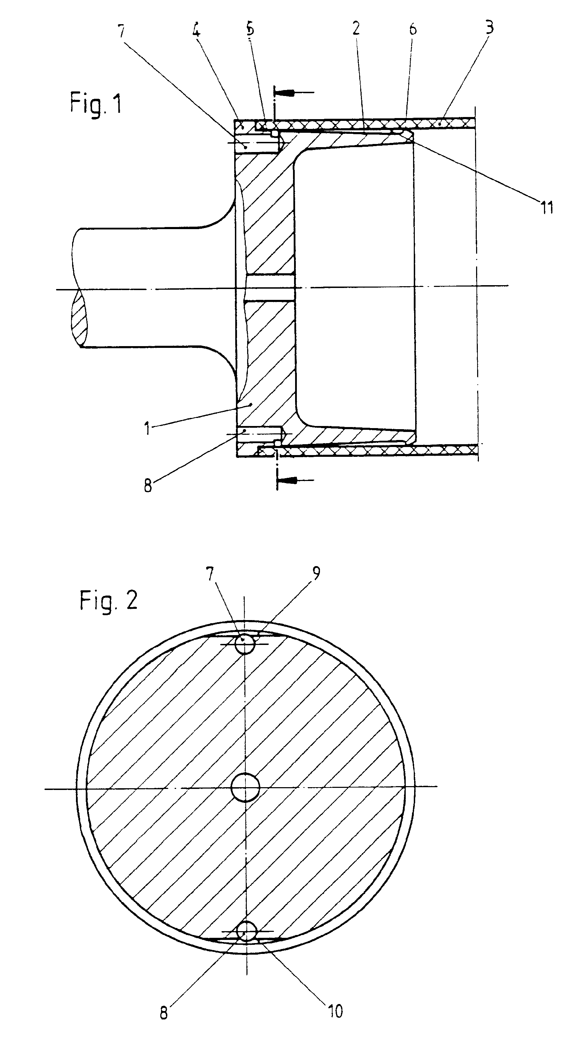

In Fig. 1 und 2 ist die Nabe 1, bestehend aus einer Flanschfläche, einem Wellenansatz und einem Nabenkörper zu erkennen, auf die ein Rohrkörper 3 bis zum Anschlag an einem Bund 4 der Nabe 1 aufgeschoben ist. An der Nabe 1 ist zwischen einer ersten Zentrierung 5 und einer zweiten Zentrierung 6, die abdichtend mit Vorspannung am Rohrkörper anliegen, ein konischer Abschnitt 2 vorgesehen, der einen im Längsschnitt keilförmigen Ringraum 11 mit der Innenwandung des Rohrkörpers bildet. Über eine axiale Einfüllöffnung 7 und eine Quernut 9 ist der Ringsplat 11 mit der Umgebung zu Einfüllzwecken verbunden, während über eine diametral entgegenliegende axiale Entlüftungsöffnung 8 und eine Quernut 10 die Entlüftung des Ringspaltes möglich ist.

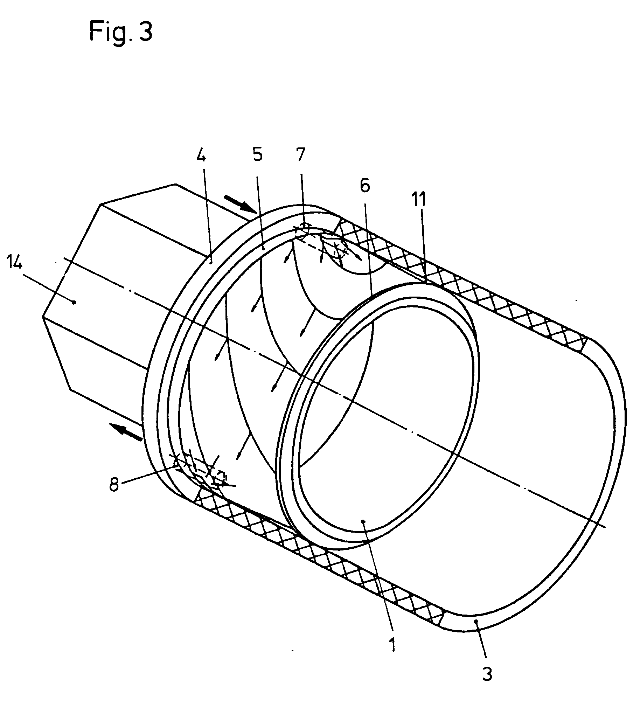

In Fig. 3 sind die entsprechenden Einzelheiten mit den gleichen Ziffern wie in Fig. 1 bezeichnet. Ein an die Nabe 1 anschließender Wellenzapfen 14 ist hier als Vielkant ausgebildet. Zusätzlich sind Linien gleichen Einfüllfortschrittes zu bestimmten Zeiten beim Befüllen mit Klebstoff durch die Einfüllöffnung 7 dargestellt, die erkennen lassen, daß aufgrund des geringeren Strömungswiderstandes am breiteren Ende des Keilraumes, d.h. an der Zentrierung 6, eine höhere Fließgeschwindigkeit erzeugt wird, so daß ein Austritt von Klebstoff an der Entlüftungsöffnung 8 ein vollständiges Ausfüllen des Ringraumes 11 mit Klebstoff erkennen läßt.

4

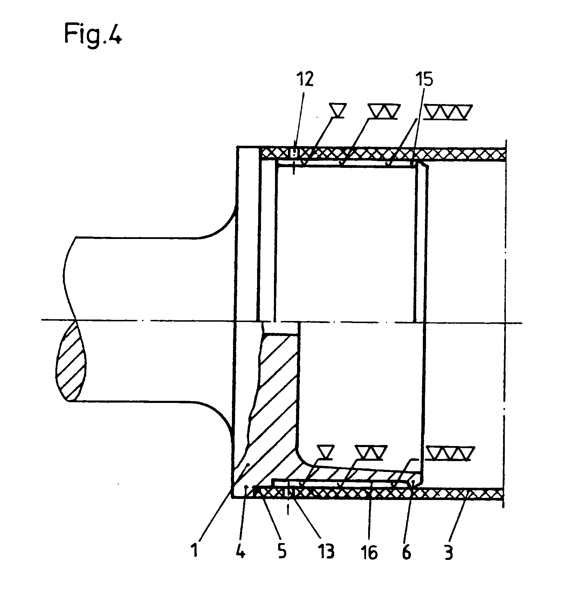

In Fig. 4 ist die Nabe 1 erkennbar, auf der ein Rohrkörper 3 bis zum Anschlag an einen Bund 4 aufgeschoben ist. An der Nabe 1 ist zwischen einer ersten Zentrierung 5 und einer weiteren Zentrierung 6, die beide mit Vorspannung am Rohrkörper anliegen, eine rein zylindrische Eindrehung 16 vorgesehen, die mit der Innenwandung des Rohrkörpers einen rein zylindrischen Ringspalt 15 bildet. Die Verbindung des Ringspaltes 15 mit der Umgebung ist über eine radiale Einführöffnung 12 und eine radiale Entlüftungsöffnung 13 im Rohrkörper 3 hergestellt. Durch Zeichen für die Oberflächenqualität ist verdeutlicht, daß an dem durch die Zentrierung 5 bestimmten Ende des Ringspalts 15, an dem die Einfüll- und Entlüftungsöffnungen 12, 13 sind, die Oberflächenrauhigkeit am Zapfen (obere Bildhälfte) und/oder am Rohrkörper (untere Bildhälfte) groß ist und zum entgegengesetzten Ende an der Zentrierung 6 zunehmend geringer wird.

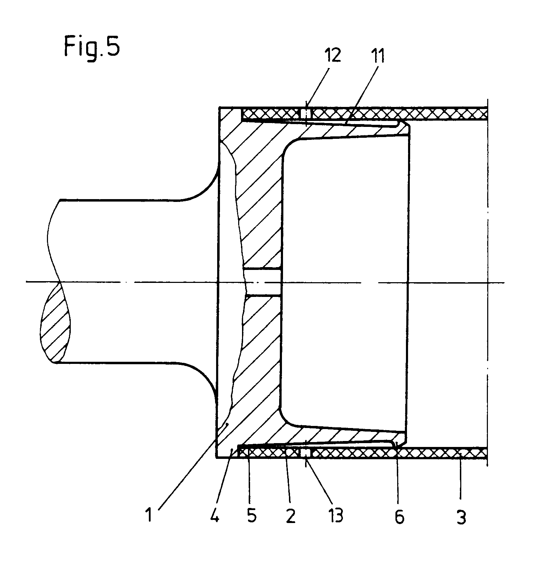

In Fig. 5 sind die gleichen Einzelheiten wie in Fig. 4 mit entsprechenden Ziffern versehen. Nach dieser Ausgestaltung hat der Zapfen 1 innerhalb des Rohrkörpers 3 zwischen dem Zentrierungen 5, 6 eine Konusfläche 2 und bildet einen in axialer Richtung keilförmig zunehmenden Ringraum 11 von der Einfüll- und Entlüftungsöffnung 12, 13 aus betrachtet, wodurch der Fließwiderstand trotz gleichbleibender Oberflächenbeschaffenheit des Zapfens und der Rohrwandung in Richtung zur Zentrierung 6 hin abnimmt.

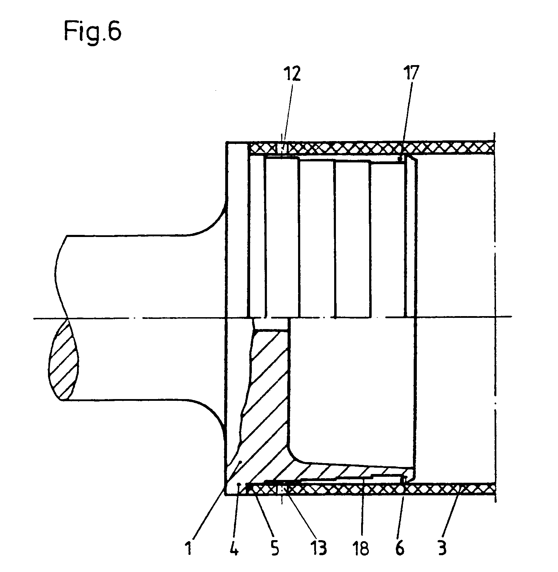

In Fig. 6 sind die entsprechenden Einzelheiten mit den gleichen Ziffern wie in Fig. 5 bezeichnet, wobei zwischen den Zentrierungen 5, 6 eine Stufenfläche 18 dargestellt ist, die mit der inneren Oberfläche des Rohrkörpers 3 einen abgestuften Ringraum 17 erzeugt. Die Wirkung ist im wesentlichen die gleiche wie nach Fig. 5, wobei hier der Fließwiderstand für den Klebstoff dann auch in Sprüngen in Richtung auf die Zentrierung 6 abnimmt.

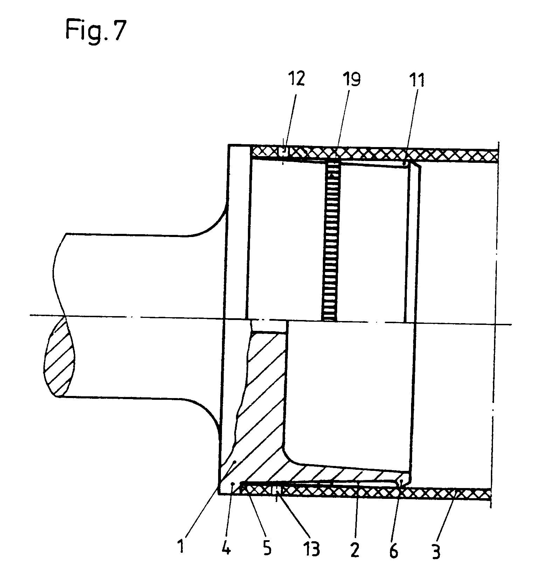

In Fig. 7 sind die entsprechenden Einzelheiten mit den gleichen Ziffern wie in Fig. 5 bezeichnet. Auch hier hat der Zapfen einen konischen Abschnitte 2 der mit dem Rohrkörper 3 einen im Längsschnitt keilförmig sich erweiternden Ringraum 11 bildet. Auf halber Länge ist im Ringraum über den Umfang verteilt eine Anzahl von Abstützelementen 19 angeordnet, die den axialen Durchtritt des Klebstoffes nicht behindern.

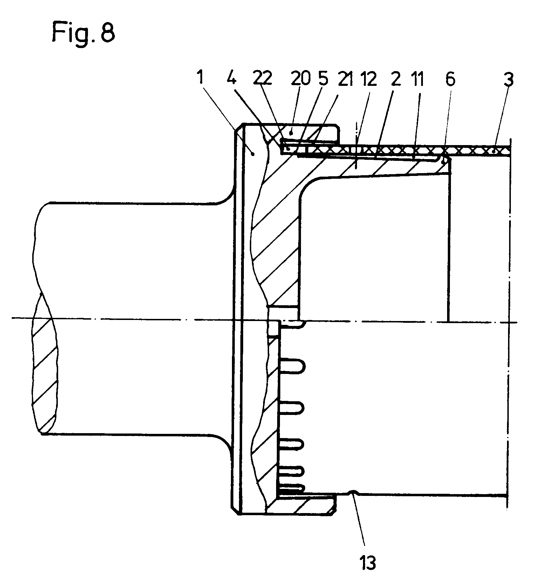

In Fig. 8 ist ein abgewandelter Zapfen 1 dargestellt, der zusätzlich einen äußeren Ringansatz 20 hat, der das Ende des Rohrkörpers 3 übergreift und einen weiteren Ringraum 21 mit in Richtung zum freien Ende des Ansatzes abnehmender radialer Dicke hat. Am Ende des Rohrkörpers 3 sind Ausnehmungen 22 vorgesehen, die den Übertritt von Klebstoff aus dem Ringraum 11 in den Ringraum 21 ermöglichen.

**Bezugszeichenliste**

1 Nabe
2 Konusfläche
3 Rohrkörper
4 Bund
5 Zentrierung
6 Zentrierung
7 Axialbohrung (Einfüllöffnung)
8 Axialbohrung (Entlüftungsöffnung)
9 Quernut
10 Quernut
11 Ringspalt (konisch)
12 Radialbohrung (Einfüllöffnung)
13 Radialbohrung (Entlüftungsöffnung)
14 Wellenzapfen
15 Ringraum (zylindrisch)
16 Eindrehung
17 Ringraum (abgestuft)
18 Stufenfläche
19 Abstutzelement
20 Ringansatz
21 Ringraum (konsich)
22 Ausnehmungen

**Patentansprüche**

1. Anordnung mit einer Klebeverbindung zwischen einer Nabe (1) oder einem Wellenzapfen einerseits und einem darauf aufgesteckten Rohrkörper (3) oder einer Hohlwelle andererseits, wobei letztere insbesondere aus Faserverbundwerkstoff besteht und wobei die Nabe (1) oder der Zapfen voneinander mit axialem Abstand angeordnete Zentrierungen (5, 6) aufweist, die über den ganzen Umfang an der Innenwandung des Rohrkörpers (3) oder der Hohlwelle anliegen, wobei die Nabe (1) oder der Zapfen mit der Innenwandung des Rohrkörpers (3) oder der Hohlwelle zwischen den Zentrierungen (5, 6) einen Ringspalt (11, 15, 17, 21) für ein Klebstoffvolumen bildet, der über zwei sich diametral gegenüberliegende Verbindungsöffnungen (8, 9 ; 12, 13) zum Einfüllen von Klebstoff einerseits und zum Entlüften andererseits mit der Umgebung verbunden ist, dadurch gekennzeichnet, daß der Ringspaltquerschnitt in axialer Richtung einen abnehmenden Fließwiderstand gegenüber flüssig eingepreßtem Klebstoff aufweist, und daß der unmittelbare Zutritt der Verbindungsöffnungen (8, 9 ; 12, 13) zum Ringspalt (11, 15, 17, 21) zum Einfüllen von Klebstoff einerseits und zum Entlüften andererseits an dem Ende mit dem höheren Fließwiderstand des Ringspaltquerschnitts liegt.

2. Anordnung nach Anspruch 1, dadurch gekennzeichnet, daß zumindest eine der durch die Nabe (1) oder den Zapfen sowie durch den Rohrkörper (3) oder die Hohlwelle gebildeten Oberflächen des Ringspalts (15) eine den Fließwiderstand bestimmende axial veränderliche Oberflächenbeschaffenheit, insbesondere eine — vom Zutritt der Verbindungsöffnungen ausgehend — abnehmende Rauhtiefe aufweist. (Fig. 1)

3. Anordnung nach Anspruch 1 oder 2, dadurch gekennzeichnet, daß der durch die Nabe (1) oder den Zapfen sowie durch den Rohrkörper (3) oder die Hohlwelle gebildete Ringspalt (11) eine den Fließwiderstand beeinflussende — vom Zutritt der Verbindungsöffnungen ausgehend — axial zunehmende, insbesondere im Längsschnitt keilförmige radiale Dicke aufweist. (Fig. 2)

4. Anordnung nach Anspruch 3, dadurch gekennzeichnet, daß die radiale Dicke des Ringspalts (17) in Stufen zunimmt.

5. Anordnung nach einem der Ansprüche 2 bis 4, dadurch gekennzeichnet, daß im Ringspalt (11) an der Nabe (1) oder dem Zapfen umfangsverteilt angesetzte Noppen (19) eine Abstützung mit axialen Unterbrechungen gegenüber dem Rohrkörper (3) oder der Hohlwelle bilden.

6. Anordnung nach einem der Ansprüche 3 bis 5, dadurch gekennzeichnet, daß die Nabe (1) einen das Ende des Rohrkörpers (3) übergreifenden Ringansatz (20) hat und mit diesem einen weiteren Ringspalt (21) bildet, der den inneren Ringspalt (11) zumindest teilweise umschließt, daß die Ringspalte (11, 21) über Öffnungen oder Ausnehmungen (22) am Rohrende miteinander verbunden sind und daß der innere Ringspalt (11) in axialer Richtung zum Rohrende einen zunehmenden Fließwiderstand und der äußere Ringspalt (21) vom Rohrende weg einen zunehmenden Fließwiderstand aufweist.

7. Anordnung nach einem der Ansprüche 1 bis 6, dadurch gekennzeichnet, daß die Nabe (1) oder der Zapfen einen sich an die eine Zentrierung (5) anschließenden Bund (4) als Anschlag für den Rohrkörper (3) oder die Hohlwelle aufweist.

8. Anordnung nach einem der Ansprüche 1 bis 7, dadurch gekennzeichnet, daß die Verbindungsöffnungen zum Befüllen und Entlüften Quernuten (9, 10) oder radiale Bohrungen umfassen, die mit axialen Bohrungen (7, 8) in der Nabe (1) oder im Zapfen in Verbindung stehen.

9. Anordnung nach einem der Ansprüche 1 bis 7, dadurch gekennzeichnet, daß die Verbindungsöffnungen zum Befüllen und Entlüften durch radiale Bohrungen (12, 13) im Rohrkörper (3) oder in der Hohlwelle dargestellt sind.

10. Anordnung nach einem der Ansprüche 1 bis 9, dadurch gekennzeichnet, daß mehrere voneinander unabhängige, durch Zentrierungen getrennte Ringräume in axialer Richtung veränderlichem Fließwiderstand zwischen Rohrkörper oder Hohlwelle einerseits und Nabe oder Zapfen andererseits ausgebildet sind.

11. Verfahren zum Verbinden einer Anordnung nach einem der Ansprüche 1 bis 10, wobei die Nabe (1) oder der Zapfen in den Rohrkörper (3) oder die Hohlwelle soweit eingesteckt werden, daß die beiden Zentrierungen (5, 6) gegenüber der Innenwandung des Rohrkörpers (3) oder der Hohlwelle mit Vorspannung abdichten und über eine der Verbindungsöffnungen (7, 9 ; 12) Klebstoff in den Ringspalt (11, 15, 17) eingepreßt wird, bis an der anderen der Verbindungsöffnungen (8, 10 ; 13) die Luft ausgepreßt ist und überschüssiger Klebstoff austritt, dadurch gekennzeichnet, daß der Klebstoff aufgrund der Reibungsverhältnisse zunächst an einer Seite des Rohrkörpers (3) in axialer Richtung zum entgegengesetzten zweiten Ende des Ringspaltes (11, 15, 17) fließt und zuerst dort beidseitig vordringt und sich ringförmig schließt, und sodann auf der anderen Seite des Rohrkörpers (3) in Gegenrichtung fließt und aus einem zuletzt keilförmigen Hohlraum mit der Basis am ersten vorderen Ende des Ringspaltes (11, 15, 17) die Luft auspreßt.

12. Verfahren nach Anspruch 11 zum Herstellen einer Anordnung nach Anspruch 6, dadurch gekennzeichnet, daß zunächst der innere Ringspalt (11) vollständig befüllt wird und anschließend Klebstoff in den äußeren Ringspalt (21) durch die Ausnehmungen (22) übertritt und diesen vom Rohrende her füllt, bis die Luft am offenen Ende ausgepreßt ist.

13. Verfahren nach Anspruch 11 oder 12, dadurch gekennzeichnet, daß in eine der Verbindungsöffnungen (7, 9 ; 12) ein Anschlußnippel zum Einfüllen von Klebstoff eingeschraubt wird.

14. Verfahren nach den Ansprüchen 11 bis 13, dadurch gekennzeichnet, daß die Verbindungsöffnungen (7, 9 ; 8, 10 ; 12 ; 13) nach dem vollständigen Befüllen des Ringraumes (11) mit Klebstoff mittels Stopfen verschlossen werden.

## Claims

1. An assembly having a glued connection between a hub (1) or a shaft journal on the one hand and a tubular member (3) or a hollow shaft plugged thereon on the other hand, with the latter consisting especially of a fibre composite material and with the hub (1) or the journal comprising axially spaced centring means (5, 6) resting across the entire circumference against the inner wall of the tubular member (3) or the hollow shaft, with the hub (1) or the journal together with the inner wall of the tubular member (3) or hollow shaft forming an annular gap (11, 15, 17, 21) between the centring means (5, 6) for a volume of glue, which annular gap, for the purpose of introducing glue on the one hand and ensuring ventilation on the other hand, is connected to the environment via two diametrically opposed connecting apertures (8, 9 ; 12, 13), characterised in that in the axial direction, the cross-section of the annular gap has a decreasing flow resistance relative to the glue pressed in in a liquid condition and that the direct access of the connecting apertures (8, 9 ; 12, 13) to the annular gap (11, 15, 17, 21) for introducing glue on the one hand and ensuring ventilation on the other hand is arranged at the end with the higher flow resistance of the cross-section of the annular gap.

2. An assembly according to claim 1, characterised in that at least one of the surfaces of the annular gap (15) formed by the hub (1) or the journal and by the tubular member (3) or the hollow shaft comprises an axially changing surface condition determining the flow resistance, especially a peak-to-valley height which starts and decreases from the access of the connecting apertures. (Fig. 1).

3. An assembly according to claim 1 or 2, characterised in that the annular gap (11) formed by the hub (1) or journal and by the tubular member (3) or hollow shaft comprises a radial thickness which influences the flow resistance, which starts from the access of the connecting apertures and increases axially and which is wedge-shaped, especially in the longitudinal section. (Fig. 2).

4. An assembly according to claim 3, characterised in that the radial thickness of the annular gap (17) increases step-like.

5. An assembly according to one of claims 2 to 4, characterised in that in the annular gap (11) at the hub (1) or journal there are attached circumferentially distributed protuberances (19) which provide support with axial interruptions relative to the tubular member (3) or hollow shaft.

6. An assembly according to one of claims 3 to 5, characterised in that the hub (1) comprises an annular attachment (20) extending over the end of the tubular member (3) and, with the help of said attachment, forms a further annular gap (21) which at least partially encloses the inner annular gap (11) ; that the annular gaps (11, 21) are connected to each other via apertures or recesses (22) at the tube end ; and that the inner annular gap (11) has an increasing flow resistance in the axial direction towards the tube end, with the outer annular gap (21) having an increasing flow resistance away from the tube end.

7. An assembly according to one of claims 1 to 6, characterised in that the the hub (1) or the journal comprises a collar (4) which adjoins the centring means (5) and forms a stop for the tubular member (3) or the hollow shaft.

8. An assembly according to one of claims 1 to 7, characterised in that the connecting apertures for filling and ventilating purposes comprise transverse grooves (9, 10) or radial bores which are in contact with axial bores (7, 8) in the hub (1) or in the journal.

9. An assembly according to one of claims 1 to 7, characterised in that the connecting apertures for filling and ventilating purposes are provided in the form of radial bores (12, 13) in the tubular member (3) or in the hollow shaft.

10. An assembly according to one of claims 1 to 9, characterised in that several independent annular spaces separated by centring means and having an axially variable flow resistance are provided between the annular member or tubular shaft on the one hand and the hub or journal on the other hand.

11. A method of connecting an assembly according to one of claims 1 to 10, with the hub (1) or journal being inserted into the tubular member (3) or hollow shaft until the centring means (5, 6) have a sealing effect with pretension relative to the inner wall of the tubular member (3) or hollow shaft, with glue being pressed into the annular gap (11, 15, 17) via one of the connecting apertures (7, 9 ; 12) until air is pressed out of the other of the connecting apertures (8, 10 ; 13) and excess glue emerges, characterised in that as a result of the friction conditions, the glue initially flows on one side of the tubular member (3) in the axial direction towards the opposite second end of the annular gap (11, 15, 17) and first advances there on both sides and closes annularly, and then flows on the other side of the tubular member (3) in the opposite direction and presses out the air from a finally wedge-shaped hollow space whose base is at the first front end of the annular gap (11, 15, 17).

12. A method according to claim 11 for producing an assembly according to claim 6, characterised in that first the inner annular gap (11) is filled completely, with glue subsequently advancing into the outer annular gap (21) through the recesses (22) and filling it from the tube end until the air is pressed out at the open end.

13. A method according to claim 11 or 12, characterised in that a connecting nipple for introducing glue is screwed into one of the connecting apertures (7, 9 ; 12).

14. A method according to claims 11 to 13, characterised in that after the annular space (11) has been filled completely, the connecting apertures (7, 9 ; 8, 10 ; 12 ; 13) are closed by glue via a plug.

## Revendications

1. Dispositif avec une liaison collée entre un moyeu (1) ou un tourillon d'arbre d'une part et une pièce tubulaire (3) ou un arbre creux emmanché dessus d'autre part, où ce dernier est en particulier fabriqué dans un matériau composite à fibres et où le moyeu (1) ou le tourillon présente des centrages (5, 6) disposés à une certaine distance axiale les uns des autres et reposant sur toute la circonférence contre la paroi intérieure de la pièce tubulaire (3) ou de l'arbre creux, où le moyeu (1) ou le tourillon forme avec la paroi intérieure de la pièce tubulaire (3) ou de l'arbre creux, entre les centrages (5, 6), une fente annulaire (11, 15, 17, 21) destinée à recevoir un volume de colle qui est reliée par des ouvertures de raccordement (8, 9 ; 12, 13) diamétralement opposées destinées à l'introduction de la colle d'une part et avec l'atmosphère d'autre part pour l'évacuation de l'air, caractérisé en ce que la section de la fente annulaire offre dans la direction axiale une résistance décroissante à l'écoulement de la colle liquide injectée et en ce que l'accès immédiat des ouvertures de raccordement (8, 9 ; 12, 13) à la fente annulaire (11, 15, 17, 21), pour l'injection de la colle d'une part et pour le désaérage d'autre part, se situe à l'extrémité de la fente annulaire offrant la résistance la plus élevée à l'écoulement.

2. Dispositif selon la revendication 1, caractérisé en ce qu'au moins l'une des surfaces de la fente annulaire (15) formées par le moyeu (1) ou le tourillon ainsi que par la pièce tubulaire (3) ou l'arbre creux présente un état de surface déterminant la résistance à l'écoulement qui varie dans la direction axiale, en particulier une profondeur de rugosité décroissante à partir de l'accès des ouvertures de raccordement (figure 1).

3. Dispositif selon la revendication 1 ou 2, caractérisé en ce que la fente annulaire (11) formée par le moyeu (1) ou le tourillon ainsi que par la pièce tubulaire (3) ou l'arbre creux présente une épaisseur radiale croissante dans la direction radiale à partir des ouvertures de raccordement, en particulier en forme de coin dans le sens longitudinal, déterminant la résistance à l'écoulement (figure 2).

4. Dispositif selon la revendication 3, caractérisé en ce que l'épaisseur radiale de la fente annulaire (17) augmente par gradins.

5. Dispositif selon l'une des revendications 2 à 4, caractérisé en ce que, dans la fente annulaire (11), des bossages (19) avec traversées axiales répartis sur la circonférence du moyeu (1) ou du tourillon assurent un soutien de la pièce tubulaire (3) ou de l'arbre creux.

6. Dispositif selon l'une des revendications 3 à 5, caractérisé en ce que le moyeu (1) possède un collet (20) recevant l'extrémité de la pièce tubulaire (3) et forme avec celle-ci une seconde fente annulaire (21) qui entoure au moins partiellement la fente annulaire intérieure (11), en ce que les fentes annulaires (11, 21) communiquent ensemble par des ouvertures ou des traversées (22) à l'extrémité du tube et en ce que la fente annulaire (11) présente dans la direction axiale une résistance à l'écoulement croissant vers l'extrémité du tube tandis que la fente annulaire extérieure (21) offre une résistance à l'écoulement décroissant à partir de l'extrémité du tube.

7. Dispositif selon l'une des revendications 1 à 6, caractérisé en ce que le moyeu (1) ou le tourillon porte un collet (4) prolongeant le centrage (5) et servant de butée pour la pièce tubulaire (3) ou l'arbre creux.

8. Dispositif selon l'une des revendications 1 à 7, caractérisé en ce que les ouvertures de raccordement servant au remplissage et au désaérage comprennent des rainures transversales (9, 10) ou des trous radiaux qui communiquent avec des trous axiaux (7, 8) dans le moyeu (1) ou dans le tourillon.

9. Dispositif selon l'une des revendications 1 à 7, caractérisé en ce que les ouvertures de raccordement servant au remplissage et au désaérage sont représentées par des trous radiaux (12, 13) dans la pièce tubulaire (3) ou dans l'arbre creux.

10. Dispositif selon l'une des revendications 1 à 9, caractérisé en ce qu'il existe plusieurs fentes annulaires, dont la résistance à l'écoulement varie dans la direction axiale, indépendantes les unes des autres, formées par des centrages entre la pièce tubulaire (3) ou l'arbre creux d'une part et le moyeu (1) ou le tourillon d'autre part.

11. Procédé d'obtention d'un dispositif selon l'une des revendications 1 à 10, où le moyeu (1) ou le tourillon est emmanché dans la pièce tubulaire (3) ou dans l'arbre creux jusqu'à ce que les deux centrages (5, 6) forment une liaison étanche avec précontrainte contre la paroi intérieure de la pièce tubulaire (3) ou de l'arbre creux et où de la colle est injectée sous pression dans la fente annulaire (11, 15, 17) par l'une des ouvertures de raccordement (7, 9 ; 12) jusqu'à ce que l'air ou l'excédent de colle sorte par l'autre des ouvertures de raccordement (8, 10 ; 13), caractérisé en ce que la colle, compte tenu des conditions de frottement, s'écoule d'abord sur l'un des côtés de la pièce tubulaire (3) dans la direction axiale vers la seconde extrémité opposée de la fente annulaire (11, 15, 17), puis continue d'y progresser en formant un anneau qui se ferme, avant de s'écouler vers l'autre extrémité de la pièce tubulaire (3) dans la direction opposée et éjecte d'un espace finalement en forme de coin dont la base est à la première extrémité avant de la fente annulaire (11, 15, 17).

12. Procédé selon la revendication 11 pour l'obtention d'un dispositif selon la revendication 6, caractérisé en ce que la fente annulaire intérieure (11) est d'abord intégralement remplie, après quoi la colle passe par les ouvertures (22) dans la fente annulaire extérieure (21) et la remplit à partir de l'extrémité du tube, jusqu'à ce que l'air soit éjecté par l'ouverture ouverte.

13. Procédé selon la revendication 11 ou 12, caractérisé en ce que l'on vis dans l'une des ouvertures de raccordement (7, 9 ; 12) un nipple pour l'injection de la colle.

14. Procédé selon les revendications 11 à 13, caractérisé en ce que, après remplissage intégral de la fente annulaire (11), les ouvertures de raccordement (7, 9 ; 8, 10 ; 12 ; 13) sont fermées par des bouchons.

Fig. 1

Fig. 2

Fig. 3

Fig.4

Fig.5

Fig.6

Fig. 7

Fig. 8